# EUROPÄISCHE PATENTSCHRIFT

(11) **EP 3 379 719 B1**
(45) Veröffentlichungstag und Bekanntmachung des Hinweises auf die Patenterteilung: **14.04.2021**
(21) Anmeldenummer: 18172313.1
(22) Anmeldetag: 14.06.2016
(51) Int. Cl.: H02P 21/06, B65G 54/02, H02K 41/03, H02P 21/12, H02P 25/064, H02P 25/062, B60L 13/03, B60L 13/00, E01B 25/12, E01B 25/34

(54) **VERFAHREN ZUR ÜBERGABE EINER TRANSPORTEINHEIT AN EINER ÜBERGABEPOSITION**
METHOD FOR TRANSFERRING A TRANSPORT UNIT TO A TRANSFERRING POSITION
PROCÉDÉ DESTINÉS À TRANSFERER UNE UNITÉ DE TRANSPORT À UNE POSITION DE TRANSMISSION

(30) Priorität: 23.06.2015 AT 505292015
(43) Veröffentlichungstag der Anmeldung: 26.09.2018
(62) Teilanmeldung aus: 16174356.2
(73) Patentinhaber: B&R Industrial Automation GmbH, 5142 Eggelsberg (AT)
(72) Erfinder: Weber, Andreas, 5020 Salzburg (AT); Forthuber, Friedrich, 5144 Handenberg (AT)
(74) Vertreter: Patentanwälte Pinter & Weiss OG

(56) Entgegenhaltungen:
- EP-A1- 2 634 913
- WO-A1-2015/042409
- KHONG P C ET AL: "Magnetic Guidance of the Mover in a Long-Primary Linear Motor", IEEE TRANSACTIONS ON INDUSTRY APPLICATIONS, IEEE SERVICE CENTER, PISCATAWAY, NJ, US, Bd. 47, Nr. 3, 1. Mai 2011 (2011-05-01), Seiten 1319-1327, XP011477767, ISSN: 0093-9994, DOI: 10.1109/TIA.2011.2125934

## Beschreibung

Die gegenständliche Erfindung betrifft ein Verfahren zur Übergabe einer Transporteinheit eines Langstatorlinearmotors an einer Übergabeposition von einem ersten Transportabschnitt, mit einer Anzahl von in Bewegungsrichtung der Transporteinheit hintereinander an einer Führungskonstruktion angeordneten Antriebsspulen im Bereich der Übergabeposition, an einen zweiten Transportabschnitt, mit einer Anzahl von in Bewegungsrichtung der Transporteinheit hintereinander an einer Führungskonstruktion angeordneten Antriebsspulen im Bereich der Übergabeposition, wobei an beiden Seiten der Transporteinheit Erregungsmagnete angeordnet sind, die mit Antriebsspulen im Bereich der Transporteinheit zusammenwirken, wobei im Bereich der Übergabeposition an beiden Seiten der Transporteinheit Antriebsspulen vorgesehen sind, die mit den Erregungsmagnete an den beiden Seiten der Transporteinheit zusammenwirken können, und der zweite Transportabschnitt an einer Ausfahrt aus der Übergabeposition einseitig mit Antriebsspulen an nur einer Seite, die mit Erregungsmagneten an dieser Seite der Transporteinheit zusammenwirken können, ausgeführt ist, und wobei aufgrund des Zusammenwirkens der Erregungsmagnete mit ferromagnetischen Bestandteilen der Führungskonstruktion an beiden Seiten der Transporteinheit erregungsmagnetische Seitenkräfte auf die Transporteinheit wirken.

In so gut wie allen modernen Produktionsanlagen ist es erforderlich, Bauteile oder Komponenten, auch über längere Transportstrecken hinweg, mit Transporteinrichtungen zwischen einzelnen Produktionsstationen zu bewegen. Dazu sind eine Vielzahl von Transport- oder Fördereinrichtungen bekannt. Häufig werden dazu Stetigförderer in verschiedenen Ausführungen eingesetzt. Konventionelle Stetigförderer sind Förderbänder in den verschiedenen Ausführungsformen, bei denen eine Drehbewegung eines elektrischen Antriebs in eine lineare Bewegung des Förderbandes umgesetzt wird. Mit solchen konventionellen Stetigförderern ist man in der Flexibilität erheblich eingeschränkt, insbesondere ist ein individueller Transport von einzelnen Transporteinheiten nicht möglich. Um dem abzuhelfen und um den Anforderungen moderner, flexibler Transporteinrichtungen gerecht zu werden, werden vermehrt sogenannte Langstatorlinearmotoren (LLM) als Ersatz für konventionelle Stetigförderer eingesetzt.

Bei einem Langstatorlinearmotor ist eine Vielzahl von elektrischen Antriebsspulen, die den Stator bilden, entlang einer Transportstrecke angeordnet. Auf einer Transporteinheit ist eine Anzahl von Erregungsmagneten, entweder als Permanentmagnete oder als elektrische Spule oder Kurzschlusswicklung, angeordnet, die mit den Antriebsspulen zusammenwirken. Der Langstatorlinearmotor kann als Synchronmaschine, sowohl selbsterregt oder fremderregt, oder als Asynchronmaschine ausgeführt sein. Durch Ansteuerung der einzelnen Antriebsspulen, zur Regelung des magnetischen Flusses, wird eine Vortriebskraft erzeugt und die Transporteinheit kann entlang der Transportstrecke bewegt werden. Dabei ist es auch möglich, entlang der Transportstrecke eine Vielzahl von Transporteinheiten anzuordnen, deren Bewegungen einzeln und unabhängig voneinander kontrolliert werden können. Ein Langstatorlinearmotor zeichnet sich insbesondere durch eine bessere und flexiblere Ausnützung über den gesamten Arbeitsbereich der Bewegung (Geschwindigkeit, Beschleunigung), eine individuelle Regelung/Steuerung der Transporteinheiten entlang der Transportstrecke, eine verbesserte Energieausnützung, die Reduktion der Wartungskosten aufgrund der geringeren Anzahl an Verschleißteilen, einen einfachen Austausch der Transporteinheiten, effizientes Monitoring und Fehlerdetektion und eine Optimierung des Produktstromes aus. Beispiele solcher Langstatorlinearmotoren können der WO 2013/143783 A1, der US 6,876,107 B2, der US 2013/0074724 A1 oder der WO 2004/103792 A1 entnommen werden.

In der US 2013/0074724 A1 und der WO 2004/103792 A1 sind die Antriebsspulen des Stators an der Oberseite der Transportstrecke angeordnet. Die Permanentmagnete sind an der Unterseite der Transporteinheiten angeordnet. In der WO 2013/143783 A1 und der US 6,876,107 B2 sind die Permanentmagnete an beiden Seiten der zentral angeordneten Antriebsspulen vorgesehen, womit die Permanentmagnete den Stator des Langstatorlinearmotors umgeben und die Antriebsspulen mit den beidseitig angeordneten Permanentmagneten zusammenwirken.

Die Führung der Transporteinheiten entlang der Transportstrecke erfolgt entweder durch Führungsrollen, wie beispielsweise in der WO 2013/143783 A1 oder der US 6,876,107 B2, oder durch magnetische Führung, wie beispielsweise in der WO 2004/103792 A1. Im Falle der magnetischen Führung sind an den Transporteinheiten beidseitig Führungsmagnete vorgesehen, die mit gegenüber an der Transportstrecke angeordneten Führungsstäben zusammenwirken. Die Führungsstäbe bilden dabei ein magnetisches Joch aus, die den magnetischen Kreis der Führungsmagnete schließen. Die damit gebildeten magnetischen Führungskreise wirken damit einer seitlichen Bewegung der Transporteinheiten entgegen, womit die Transporteinheiten seitlich geführt werden. Eine ähnliche magnetische Seitenführung kann auch der US 6,101,952 A entnommen werden.

Auch Khong, P.C., et al., "Magnetic Guidance of the Mover in a Long-Primary Linear Motor", IEEE Transactions on Industry Applications, Vo.47, No.3, May/June 2011, S.1319-1327 beschreibt eine magnetische Führung einer Transporteinheit eines Langstatorlinearmotors. Hierbei werden durch die Statorströme Normalkräfte erzeugt, die einer Abweichung der Transporteinheit von einer Referenzposition in Normalrichtung entgegenwirken, um die Transporteinheit zur Führung in Referenzposition zu halten.

In vielen Transporteinrichtungen sind auch Übergabepositionen, z.B. in Form von Weichen, notwendig, um komplexe und intelligente Bahnplanungen bzw. Bahnrealisierungen der Transporteinrichtung zu ermöglichen. Diese Übergabepositionen wurden bisher oftmals mithilfe zusätzlicher mechanischer Auslöseeinheiten realisiert. Ein Beispiel dafür findet sich in der US 2013/0074724 A1 in Form einer mechanisch ausgelösten Weiche mittels beweglicher Umlenkarmen oder eines Drehteller.

Es sind aber auch schon Transporteinrichtungen bekannt geworden, in denen zusätzliche elektrische Hilfsspulen verwendet werden, um eine Weichenauslösung zu realisieren. In der US 6,101,952 A sind die Hilfsspulen beispielsweise am magnetischen Joch des magnetischen Führungskreises angeordnet, während die Hilfsspulen in der US 2013/0074724 A1 seitlich an der Transportstrecke angeordnet sind. In beiden Fällen wird durch die Hilfsspulen in den magnetischen Führungskreis ein magnetischer Fluss eingeprägt, der eine seitliche Kraft erzeugt, die die Transporteinheit in eine Richtung lenkt. Durch die zusätzlich notwendigen Hilfsspulen erhöht sich aber der Aufwand für die Umsetzung einer Transporteinrichtungen, da die Hilfsspulen zusätzlich verbaut und elektrisch versorgt und angesteuert werden müssen. Zusätzlich sind dazu auch separate Führungsmagnete an den Transporteinheiten erforderlich.

In der DE 1 963 505 A1, der WO 2015/036302 A1 und der WO 2015/042409 A1 sind magnetisch aktivierte Weichen eines Langstatorlinearmotors beschrieben, die ohne zusätzliche Hilfsspulen auskommen. Bei diesen Langstatorlinearmotoren sind die Erregungsmagnete der Transporteinheiten zwischen beidseitig angeordneten Antriebsspulen angeordnet. Im Bereich einer Weiche kann durch Bestromung der Antriebsspulen auf nur einer Seite der Transportstrecke eine Seitenkraft erzeugt werden, mit der die Transporteinheit im Bereich der Weiche gelenkt werden kann, um die Transporteinheit nach der Weiche auf der gewünschten Transportstrecke weiterzubewegen. Die Weichenauslösung erfolgt dabei derart, dass die Antriebsspulen im Bereich der Weiche nur auf der Seite der Transportstrecke aktiviert werden, entlang der sich die Transporteinheit weiterbewegen soll. Die Antriebsspulen der anderen Seite werden deaktiviert (DE 1 963 505 A1, WO 2015/036302 A1, WO 2015/042409 A1) oder umgepolt (WO 2015/036302 A1). Das bringt aber gewisse Probleme mit sich. Werden die Antriebsspulen einer Seite im Bereich der Weiche deaktiviert, verliert die Transporteinheit im Bereich der Weiche die Hälfte der Vortriebskraft, womit der Bereich der Weiche nur mit einer reduzierten Geschwindigkeit durchfahren werden kann. Im Bereich der Weiche könnte es damit zu Stauungen der Transporteinheiten kommen, was für die Steuerung der Transporteinrichtung ungünstig wäre. Das Umpolen ist rein statisch und es kann eine bestimmte, vorgegbene Seitenkraft aktiviert oder deaktiviert werden. Durch Umpolen kann somit im Bereich der Weiche eine bestimmte, vorgegebene Seitenkraft eingestellt werden. Wird die Seitenkraft aus Gründen der Sicherheit in der Weichenfahrt überdimensioniert so führt das zu erhöhter Reibung und erhöhtem Verschleiß. Die Transporteinheiten müssten damit mechanisch entsprechend dimensioniert werden, was die Transporteinheiten vergrößert, schwerer und teurer macht. Abgesehen davon erhöht sich damit auch der Verschleiß der mechanischen Komponenten der Transporteinheiten, insbesondere der mechanischen Führungselementen. Wird die Seitenkraft hingegen kleiner gewählt, so wird dadurch die Sicherheit der Weichenfahrt verringert, beispielsweise wenn die Transporteinheit mit Last doch schwerer als angenommen ist. Damit ist auch das Umpolen zur Weichenauslösung für den Betrieb eines Langstatorlinearmotors eher nachteilig.

Es ist daher eine Aufgabe der gegenständlichen Erfindung eine Transporteinrichtung in Form eines Langstatorlinearmotors anzugeben, in der eine Übergabeposition realisierbar ist, in der die Transporteinheiten magnetisch gelenkt werden und dabei durch die Übergabe möglichst unbeeinflusst bleiben.

Diese Aufgabe wird erfindungsgemäß durch ein Verfahren gemäß Anspruch 1 gelöst, wobei diese Lösung umfasst, dass in einem Übergabebereich der Übergabeposition an zumindest einer Seite der Transporteinheit in zumindest eine Antriebsspule ein Statorstrom eingeprägt wird, der eine elektromagnetische Seitenkraft auf die Transporteinheit erzeugt und dass die an beiden Seiten der Transporteinheit resultierenden Seitenkräfte, jeweils als Summe der wirkenden erregungsmagnetischen Seitenkraft und der elektromagnetischen Seitenkraft, im Betrag unterschiedlich sind, um eine Lenkwirkung zu erzeugen, wobei die Lenkwirkung die Transporteinheit in der Übergabeposition entlang des zweiten Transportabschnittes führt. Es werden für die Lenkung der Transporteinheiten in der Übergabeposition keine zusätzlichen Hilfselemente (wie etwa Spulen, Schalter, etc.) benötigt. Die Auslösung erfolgt rein durch die für die Vortriebsbewegung benötigten Antriebsspulen und basiert auf einer Regelung des elektromagnetischen Feldes. Durch die Einprägung einer seitenkraftbildenden Kraftkomponente auf zumindest einer Seite der Transporteinheit kann damit auf einfache Weise eine Lenkwirkung erzeugt werden.

Wenn die mit einer vortriebskraftbildenden Stromkomponente des Statorstromes eine auf die Transporteinheit wirkende Vortriebskraft geregelt wird und in der Übergabeposition mit einer seitenkraftbildenden Stromkomponente des Statorstromes die Lenkwirkung geregelt wird, kann die Regelung der Vortriebskraft und die Regelung der Vortriebskraft vorteilhafterweise entkoppelt werden. Dazu kann die Vortriebskraft mit einem Positionsregler durch Ausregeln eines Positionsfehlers zur Regelung der Position der Transporteinheit geregelt werden und die Lenkwirkung mit einem Lenkregler durch Ausregeln eines Flussfehlers.

Die gegenständliche Erfindung wird nachfolgend unter Bezugnahme auf die Figuren 1 bis 10 näher erläutert, die beispielhaft, schematisch und nicht einschränkend vorteilhafte Ausgestaltungen der Erfindung zeigen. Dabei zeigt
Fig.1 und 2 jeweils eine Transporteinrichtung in Form eines Langstatorlinearmotors,
Fig.3 den konstruktiven und elektrischen Aufbau des Langstatorlinearmotors,
Fig.4 eine erste Ausführung eines erfindungsgemäßen Verfahrens zur Übergabe einer Transporteinheit an einer Übergabeposition,
Fig.5 die an der Transporteinheit wirkenden Kräfte bei dieser ersten Ausführung,
Fig.6 eine zweite Anwendung des erfindungsgemäßen Verfahrens zur Übergabe einer Transporteinheit an einer Übergabeposition,
Fig.7 die an der Transporteinheit wirkenden Momente bei einem weiteren Ausführungsbeispiel zur Erzeugung einer Lenkwirkung,
Fig.8 eine zweite Ausführung eines erfindungsgemäßen Verfahrens zur Übergabe einer Transporteinheit an einer Übergabeposition und
Fig.9 und 10 ein Regelungskonzept für das erfindungsgemäße Verfahren.

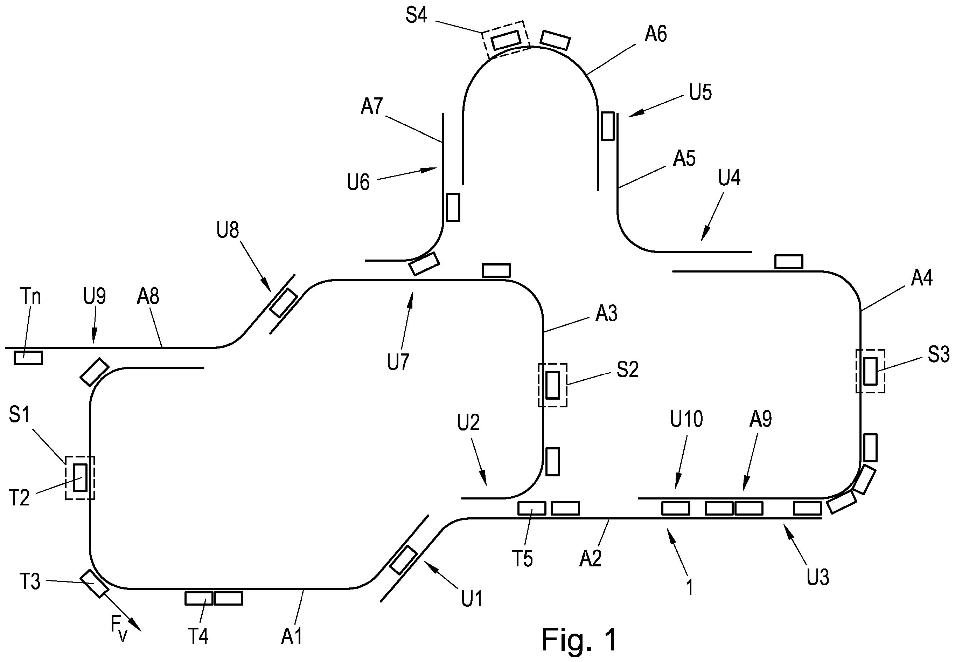

In Fig.1 ist eine Transporteinrichtung 1 in Form eines Langstatorlinearmotors beispielhaft dargestellt. Die Transporteinrichtung 1 besteht aus einer Anzahl von Transportabschnitten A1 ... A9, die zur Transporteinrichtung 1 zusammengestellt sind. Dieser modulare Aufbau ermöglicht eine sehr flexible Gestaltung der Transporteinrichtung 1, bedingt aber auch eine Vielzahl von Übergabepositionen U1 ... U9, an denen die auf der Transporteinrichtung 1 bewegten Transporteinheiten T1 ... Tn (aus Gründen der Übersichtlichkeit sind in Fig.1 nicht alle Transporteinheiten mit einem Bezugszeichen gekennzeichnet) von einem Transportabschnitt A1 ... A9 auf einen anderen übergeben werden.

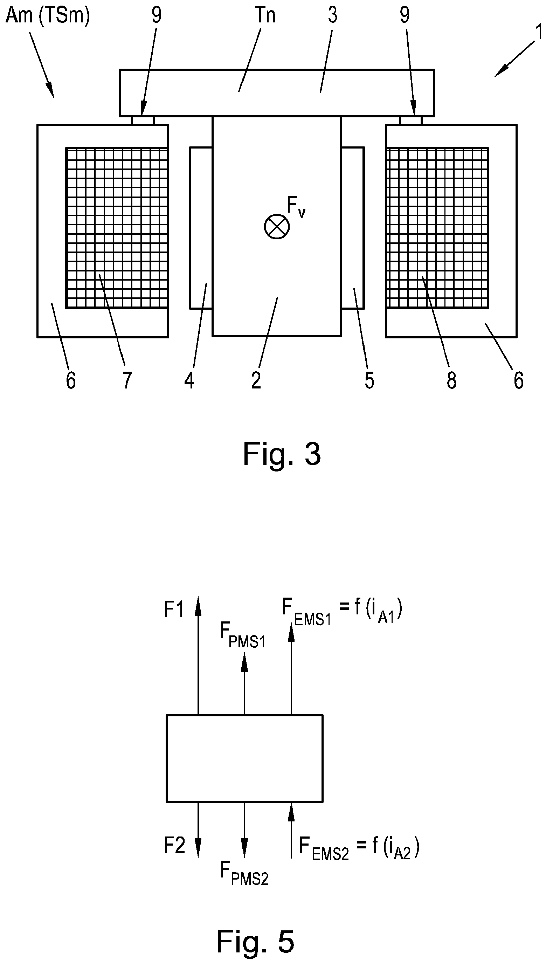

Die Transporteinrichtung 1 ist als Langstatorlinearmotor ausgeführt, bei denen die Transportabschnitte A1 ... A9 in an sich bekannter Weise jeweils einen Teil eines Langstators eines Langstatorlinearmotors ausbilden. Entlang der Transportabschnitte A1 ... A9 sind daher in Längsrichtung in bekannter Weise eine Vielzahl von elektrischen Antriebsspulen angeordnet (in Fig.1 aus Gründen der Übersichtlichkeit nicht dargestellt), die mit Erregungsmagneten an den Transporteinheiten T1 ... Tn (siehe Fig.3) zusammenwirken. In ebenso bekannter Weise wird durch Kontrolle des elektrischen Statorstromes i_{A} der Antriebsspulen 7, 8 für jede der Transporteinheiten T1 ... Tn eine Vortriebskraft Fᵥ erzeugt, die die Transporteinheiten T1 ... Tn in Längsrichtung entlang der Transportabschnitte A1 ... A9, also entlang der Transportstrecke, bewegt. Jede der Transporteinheiten T1 ... Tn kann dabei individuell (Geschwindigkeit, Beschleunigung, Bahn) und unabhängig (bis auf die Vermeidung von möglichen Kollisionen) von den anderen Transporteinheiten T1 ... Tn bewegt werden. Nachdem dieses grundlegende Prinzip eines Langstatorlinearmotors hinreichend bekannt ist, wird hier nicht näher darauf eingegangen.

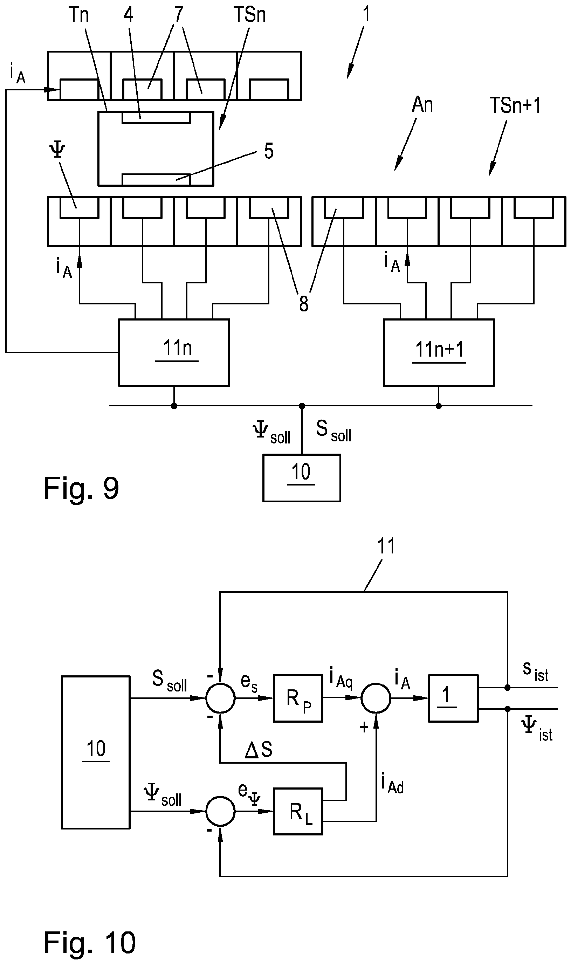

Es ist ebenso bekannt, einen Transportabschnitt A1 ... A9 aus einzelnen Transportsegmenten TS zusammenzusetzen, die jeweils eine Anzahl von Antriebsspulen tragen und die jeweils durch eine zugeordnete Segmentregelungseinheit 11 geregelt werden, wie beispielsweise in der US 6,876,107 B2 beschrieben und in Fig. 9 dargestellt ist. Eine Transporteinheit T1 ... Tn, die sich in einem Transportsegment TS befindet, wird daher von der zugehörigen Segmentregelungseinheit 11 geregelt. Im Wesentlichen bedeutet das, dass die Segmentregelungseinheit 11 die Antriebsspulen 7, 8 des zugehörigen Transportsegments TS so regelt, dass die Transporteinheit T1 ... Tn durch die Vortriebskraft in der gewünschten Weise (Geschwindigkeit, Beschleunigung) entlang des Transportsegments TS bewegt wird. Bewegt sich eine Transporteinheit T1 ... Tn von einem Transportsegment TSn in das nächstfolgende Transportsegment TSn+1, wird auch die Regelung der Transporteinheit T1 ... Tn in geordneter Weise auf die Segmentregelungseinheit 11ₙ₊₁ des nächstfolgenden Transportsegments TSn+1 übergeben. Die Bewegung der Transporteinheit T1 ... Tn durch die Transporteinrichtung 1 wird in einer übergeordneten Anlagenregelungseinheit 10, die mit den Segmentregelungseinheiten 11 verbunden ist, überwacht. Die Anlagenregelungseinheit 10 steuert beispielsweise durch Positionsvorgaben die Bewegung der Transporteinheiten Tn durch die Transporteinrichtung 1. Die Segmentregelungseinheiten 11 regeln dann einen allfälligen Fehler zwischen Sollgröße und Istgröße aus.

Entlang der Transportstrecke der Transporteinrichtung 1 sind auch einige Übergabepositionen U1 ... U10 angeordnet. Hierbei sind verschiedene Arten von Übergabepositionen U1 ... U10 denkbar. An den Übergabepositionen U2 und U7 ist z.B. eine Weiche vorgesehen, während die anderen Übergabepositionen U1, U3 ... U6, U8, U9 z.B. als Wechselstellen von einem Transportabschnitt A1 ... A8 auf einen anderen ausgeführt sind. An der Übergabeposition U10 ist z.B. ein Übergang von einem einseitigen Transportabschnitt A2 auf einen zweiseitigen Transportabschnitt A9 vorgesehen. An der Übergabeposition U2 (Weiche) kann eine Transporteinheit T6 beispielswiese auf dem Transportabschnitt A2 oder dem Transportabschnitt A3 weiterbewegt werden. An einer Übergabeposition U1 (Wechselposition) wird eine Transporteinheit T5 vom einseitigen Transportabschnitt A1 an den einseitigen Transportabschnitt A2 übergeben.

Entlang der Transportstrecke der Transporteinrichtung 1, die im Wesentlichen durch die Längsrichtung der Transportabschnitt A1 ... A8 gegeben ist, können auch eine Anzahl von Arbeitsstationen S1 ... S4 angeordnet sein, in denen eine Manipulation an den mit den Transporteinheit T1 ... Tn transportierten Komponenten stattfindet. Die Arbeitsstation S1 kann beispielsweise als Einschleuse- und/oder Ausschleusestation ausgeführt sein, in der fertig bearbeitete Komponenten entnommen werden und zu bearbeitende Komponenten an eine Transporteinheit T1 ... Tn übergeben werden. In den Arbeitsstationen S2 ... S4 können an den Komponenten irgendwelche Bearbeitungsschritte vorgenommen werden. Dabei können die Transporteinheiten T1 ... Tn in einer Arbeitsstationen S1 ...S4 zur Bearbeitung gestoppt werden, z.B. in einer Füllstation, in der leere Flaschen befüllt werden, oder durchbewegt werden, z.B. in einer Temperierstation in der Komponenten temperaturbehandelt werden, gegebenenfalls auch mit einer anderen Geschwindigkeit als zwischen den Arbeitsstationen S1 ... S4.

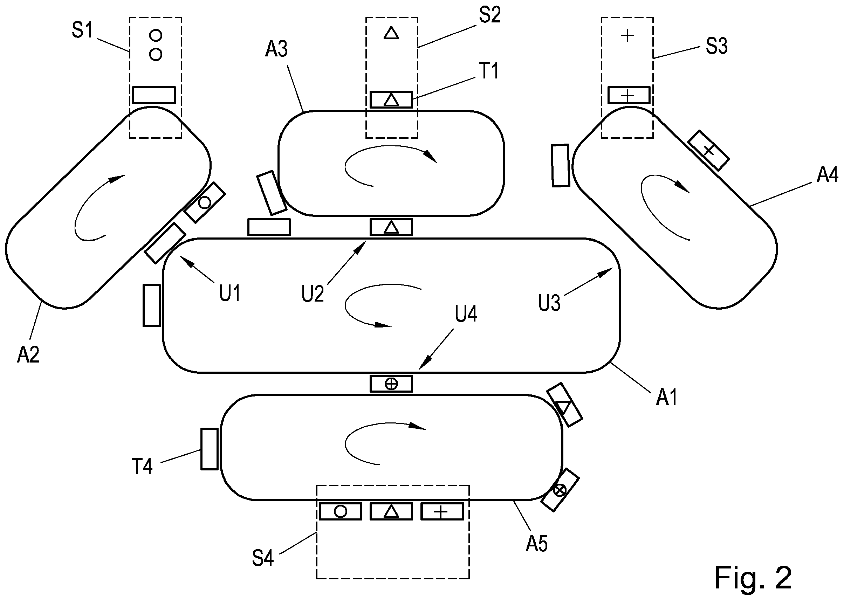

Ein anderes Beispiel einer Transporteinrichtung 1 ist in Fig.2 dargestellt. Hier sind fünf in sich geschlossene Transportabschnitte A1 ... A5 vorgesehen. Die Transportabschnitt A2 ... A4 dienen hierbei dem Einschleusen von verschiedenen Komponenten an den Arbeitsstationen S1 ... S3. In einer Arbeitsstation S4 eines Transportabschnitt A5 werden diese Komponenten miteinander verbunden oder anderweitig bearbeitet und aus der Transporteinrichtung 1 ausgeschleust. Ein weiterer Transportabschnitt A1 dient der Überführung der Komponenten aus den Transportabschnitten A2, A3, A4 in den Transportabschnitt A5. Dazu sind Übergabepositionen U1, U2, U3 vorgesehen, um die Transporteinheiten Tn mit den verschiedenen Komponenten in den Transportabschnitt A1 überzuführen. Weiters ist eine Übergabeposition U4 vorgesehen, in der die Transporteinheiten Tn mit den verschiedenen Komponenten in den Transportabschnitt A5 überführt werden.

Um eine erfindungsgemäße Übergabeposition U1 ... U10 realisieren zu können, ist es zumindest im Bereich der Übergabeposition U1 ... U10 erforderlich, dass in Bewegungsrichtung gesehen an beiden Seiten der Transporteinheit Tn Antriebsspulen 7, 8 vorgesehen sind und dass an beiden Seiten der Transporteinheit Tn Erregungsmagnete 4, 5 angeordnet sind. Die Erregungsmagnete können als Permanentmagnete oder als Elektromagnete ausgeführt sein. Eine besonders vorteilhafte Ausgestaltung des Langstatorlinearmotors, zumindest im Bereich der Übergabepositionen U, wird anhand von Fig.3 erläutert.

Fig.3 zeigt einen Querschnitt durch einen beliebigen Transportabschnitt Am und einer darauf bewegten Transporteinheit Tn. Eine Transporteinheit Tn besteht hier aus einem Grundkörper 2 und einer daran angeordneten Komponentenaufnahme 3, wobei die Komponentenaufnahme 3 grundsätzlich an einer beliebigen Stelle des Grundkörpers 2 angeordnet sein kann, insbesondere auch an der Unterseite für hängende Komponenten. Am Grundkörper 2 ist zu beiden Seiten der Transporteinheit Tn die Anzahl der Erregungsmagnete 4, 5 des Langstatorlinearmotors angeordnet. Die Transportstrecke der Transporteinrichtung 1, bzw. eines Transportabschnitts Am, bzw. eines Transportsegments TSm eines Transportabschnitts Am, wird durch eine stationäre Führungskonstruktion 6 gebildet, an der die Antriebsspulen 7, 8 des Langstatorlinearmotors angeordnet sind. Der Grundkörper 2 mit den beidseitig angeordneten Permanentmagneten 4, 5 ist dabei zwischen den Antriebsspulen 7, 8 angeordnet. Damit ist jeweils zumindest ein Erregungsmagnet 4, 5 einer Antriebsspule 7, 8 (oder einer Gruppe von Antriebsspulen) gegenüberliegend angeordnet und wirkt damit mit der Antriebsspule 7, 8 zur Erzeugung einer Vortriebskraft Fᵥ zusammen. Damit ist die Transporteinheit Tn zwischen der Führungskonstruktion 6 und entlang der Transportstrecke bewegbar. Am Grundkörper 2 und/oder an der Komponentenaufnahme 3 können natürlich auch noch (hier aus Gründen der Übersichtlichkeit nicht dargestellte oder nur angedeutete) Führungselemente 9, wie Rollen, Räder, Gleitflächen, etc., vorgesehen sein, um die Transporteinheit Tn entlang der Transportstrecke zu führen. Die Führungselemente der Transporteinheit Tn wirken dabei zur Führung mit der stationären Führungskonstruktion 6 zusammen, z.B. in dem sich die Führungselemente 9 an der Führungskonstruktion 6 abstützen, daran abgleiten oder abrollen, etc.. Die Führung der Transporteinheit Tn kann aber auch zumindest durch das Vorsehen von Führungsmagneten erfolgen.

Um eine Transporteinheit Tn vorwärts zu bewegen wird in die beidseitigen Antriebsspulen 7, 8 bekanntermaßen ein Statorstrom i_{A1}, i_{A2} eingeprägt, wobei in verschiedenen Antriebsspule 7, 8 auch unterschiedliche Statorströme i_{A1}, i_{A2} eingeprägt werden können. Hierbei ist es auch ausreichend nur in die Antriebsspulen 7, 8 einen Statorstrom i_{A1}, i_{A2} einzuprägen, die gerade mit den Erregungsmagneten 4, 5 an der Transporteinheit Tn zusammenwirken können. Zur Erzeugung einer auf die Transporteinheit Tn wirkenden Vortriebskraft Fᵥ, wird eine Antriebsspule 7, 8 mit einem Statorstrom i_{A} mit einer vortriebskraftbildenden Stromkomponente i_{Aq} bestromt.

Für die Bewegung der Transporteinheit Tn müssen aber nicht gleichzeitig die beidseitig angeordneten Antriebsspulen 7, 8 durch Einprägen eines Statorstromes i_{A} bestromt werden. Es reicht grundsätzlich aus, wenn die auf die Transporteinheit Tn zur Bewegung wirkende Vortriebskraft Fᵥ nur mittels der Antriebsspulen 7, 8 einer Seite und Permanentmagnet 4, 5 auf der zugehörigen Seite der Transporteinheit Tn erzeugt wird. An Streckenabschnitten der Transportstrecke, an denen eine große Vortriebskraft Fᵥ benötigt wird, z.B. im Falle einer Steigung, einer schweren Last oder in Bereichen der Beschleunigung der Transporteinheit Tn, können die Antriebsspulen 7, 8 zu beiden Seiten bestromt werden (z.B. Transportabschnitt A9 in Fig.1), womit die Vortriebskraft Fᵥ vergrößert werden kann. Ebenso ist es denkbar, dass in gewissen Transportabschnitten A die Führungskonstruktion 6 nur einseitig ausgeführt ist, oder dass in gewissen Transportabschnitten A die Führungskonstruktion 6 zwar zweiseitig ausgeführt ist, aber nur einseitig mit Antriebsspulen 7, 8 bestückt ist. Das ist auch in Fig.1 angedeutet, in der Streckenabschnitte mit beidseitiger Führungskonstruktion 6 und Streckenabschnitte mit nur einseitiger Führungskonstruktion 6 angedeutet sind.

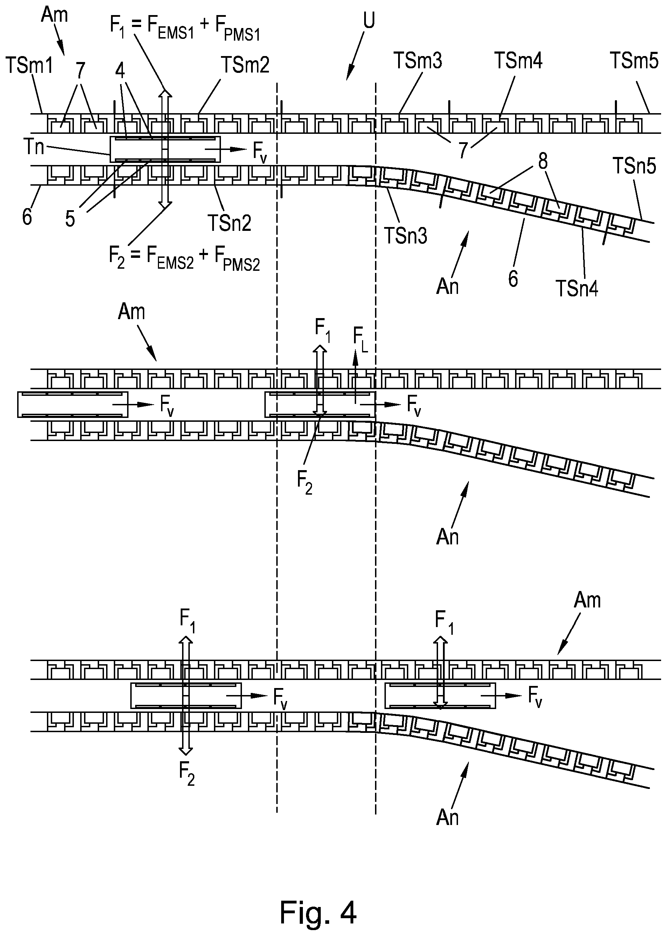

Eine erfindungsgemäße Übergabeposition U, hier in Form einer Weiche wie z.B. die Übergabeposition U2 in Fig.1, zwischen zwei Transportabschnitten Am, An wird nun anhand der Fig.4 erläutert. Entlang der Transportabschnitte Am, An sind wie oben beschrieben die Antriebsspulen 7, 8 in Bewegungsrichtung hintereinander angeordnet. Die Transportabschnitte Am, An bestehen hier aus in Längsrichtungen hintereinander folgenden Transportsegmenten TSm1, TSm2, TSm3, TSm4, TSm5 bzw. TSn1, TSn2, TSn3, TSn4, jeweils mit einer Anzahl von Antriebsspulen 7, 8. Vor allem im Falle einer Weiche als Übergabeposition U ist im Bereich der Ausfahrt (oder Einfahrt bei umgekehrter Fahrtrichtung) ein Streckenabschnitt vorhanden, an dem nur an einer Seite eine Führungskonstruktion 6 bzw. Antriebsspulen 7, 8 angeordnet werden können.

Eine Transporteinheit Tn wird entlang der Transportstrecke, hier zuerst der Transportabschnitt Am, bewegt. Dazu sind die Antriebsspulen 7, 8 im Bereich der Transporteinheit Tn, also im Bereich in dem die Erregungsmagnete 4, 5 der Transporteinheit Tn und Antriebsspulen 7, 8 zusammenwirken können, mit einem Statorstrom i_{A} bestromt, wobei die Statorströme i_{A1}, i_{A2} dieser Antriebsspulen 7, 8 nicht gleich sein müssen. Dafür sorgt die zugehörige Segmentsteuereinheit 11ₘ₁ (siehe Fig.9). Der Statorstrom i_{A1}, i_{A2}, bzw. die vortriebskraftbildende Komponenten i_{Aq1}, i_{Aq2}, der Antriebsspulen 7, 8 erzeugt in Zusammenwirken mit den Erregungsmagneten 4, 5 die auf die Transporteinheit Tn wirkende Vortriebskraft Fᵥ.

Auf die Transporteinheit Tn wirken an den beiden Seiten immer die erregungsmagnetischen Seitenkräfte F_{PMS1}, F_{PMS2} aufgrund des Zusammenwirkens der Erregungsmagnete 4, 5 der Transporteinheit Tn mit ferromagnetischen Bestandteilen der Führungskonstruktion 6. Die an beiden Seiten der Transporteinheit Tn wirkenden erregungsmagnetischen Seitenkräfte F_{PMS1}, F_{PMS2} sind im Normalfall, bei gleichem Luftspalt, gleichem Aufbau der Führungskonstruktion 6 an beiden Seiten, usw., gleich groß und entgegengerichtet, sodass die vektorielle Summe der wirkenden erregungsmagnetischen Seitenkräfte F_{PMS1}, F_{PMS2} Null ergibt. Im Idealfall ist die Transporteinheit Tn daher frei von Seitenkräften.

Die gegenständliche Erfindung beruht nun darauf, dass der magnetische Fluss **ψ** bzw. das magnetische Feld zwischen Transporteinheit Tn und Antriebsspulen 7, 8 bzw. der Führungskonstruktion 6, der im Normalfall von den Permanentmagneten 4, 5 hervorgerufen wird, gezielt beeinflusst wird, um der Transporteinheit Tn eine Lenkwirkung L einzuprägen. Dazu wird der für das magnetische Feld verantwortliche Stromraumvektor des Statorstromes i_{A} zumindest einer Antriebsspule 7, 8 so geändert, dass eine vortriebskraftbildende und/oder seitenkraftbildende elektromagnetische Kraftkomponente entsteht, die der Vortriebskraft F_{V} überlagert wird. Das Ziel ist dabei in der Regel, dass die wirkende Vortriebskraft F_{V} und damit die Vortriebsbewegung der Transporteinheit Tn nicht beeinflusst wird.

In einer ersten Ausgestaltung der Erfindung wird durch den Statorstrom i_{A}, bzw. den daraus hervorgehenden magnetischen Fluss **ψ** (magnetischer Fluss **ψ** und Statorstrom i_{A} sind als äquivalent anzusehen), nicht nur die für die Bewegung der Transporteinheit Tn benötigte Vortriebskraft F_{V} erzeugt, sondern auch eine seitenkraftbildende elektromagnetische Kraftkomponente F_{EMS}, in weiterer Folge auch elektromagnetische Seitenkraft genannt. Dazu wird einer der mit der Transporteinheit Tn zusammenwirkenden Antriebsspulen 7, 8 ein Statorstrom i_{A} eingeprägt, der neben der vortriebskraftbildenden elektromagnetischen Kraftkomponente, die die Vortriebskraft F_{V} bewirkt, eine Kraftkomponente quer dazu, also in Seitenrichtung, hervorruft. Die elektromagnetische Seitenkraft F_{EMS} wird damit der Vortriebskraft F_{V} überlagert. Die Komponenten ψ_{d} des eingeprägten elektromagnetischen Feldes, die die Seitenkraft hervorrufen, dienen hierbei praktisch der Schwächung oder Stärkung des wirkenden erregungsmagnetischen Feldes. Damit wirken auf die Transporteinheit Tn die resultierenden Seitenkräfte F1, F2, die sich jeweils als Summe aus der wirkenden erregungsmagnetischen Seitenkraft F_{PMS} und, falls vorhanden, der elektromagnetischen Seitenkraft F_{EMS} an jeder Seite der Transporteinheit Tn ergeben, also F₁ = F_{PMS1} + F_{EMS1} und F₂ = F_{PMS2} + F_{EMS2} (siehe Fig. 5).

Überall dort, wo keine elektromagnetische Seitenkraft F_{EMS} benötigt wird, also z.B. außerhalb einer Übergabeposition U, werden der Stromraumzeiger der in die Antriebsspulen 7, 8 eingeprägten Statorströme i_{A1}, i_{A2} vorzugsweise so geregelt, dass die vektorielle Summe der resultierenden Seitenkräfte F₁, F₂ Null ist. Im Idealfall bedeutet das, dass die elektromagnetischen Seitenkräfte F_{EMS1}, F_{EMS2} gleich Null sind. Damit erreicht man in diesen Bereichen einen maximalen Wirkungsgrad der Bewegung der Transporteinheit Tn, da die ganze Energie in die Erzeugung der Vortriebskraft F_{V} fließt.

Auch im Einfahrtsbereich der Übergabeposition U (Fig.4 oben) werden die Statorströme i_{A1}, i_{A2} vorzugsweise beidseitig so eingeprägt, dass die vektorielle Summe der resultierenden Seitenkräfte F₁, F₂, bzw. die elektromagnetischen Seitenkräfte F_{EMS1}, F_{EMS2}, Null sind. Die entstehenden Seitenkräfte F₁, F₂, die sich damit auf die erregungsmagnetischen Seitenkräfte F_{PMS1}, F_{PMS2} reduzieren, sind damit im Einfahrtsbereich der Übergabeposition U im Normalfall gleich groß und entgegengerichtet und heben sich damit auf.

Im Übergabebereich (Fig.4 Mitte) der Übergabeposition U werden die Statorströme i_{A1}, i_{A2}, die in die Antriebsspulen 7, 8 eingeprägt werden, nun so geändert, dass sich durch Feldschwächung oder Feldstärkung des permanentmagnetischen Feldes resultierende Seitenkräfte F₁, F₂ an den beiden Seiten der Transporteinheit Tn ergeben, die im Betrag unterschiedlich sind. Da der magnetische Fluss ψ eine Funktion des Statorstromvektors i_{A} ist, kann die für die Seitenkraft verantwortliche magnetische Flusskomponente ψ_{d} durch Ändern des vektoriellen Stromraumzeigers des Statorstromes i_{A} an einer Seite, oder auch an beiden Seiten, der Transporteinheit Tn verändert werden, um die elektromagnetische Seitenkraft F_{EMS1}, F_{EMS2} an zumindest einer Seite zu erzeugen. Vorzugsweise wird der magnetische Fluss **ψ** so geändert, dass die elektromagnetischen Seitenkräfte F_{EMS1}, F_{EMS2} an den beiden Seiten der Transporteinheit Tn in dieselbe Richtung zeigen (Fig.5). Man könnte den magnetischen Fluss **ψ** zwar auch so ändern, dass die elektromagnetische Seitenkräfte F_{EMS1}, F_{EMS2} an den beiden Seiten der Transporteinheit Tn unterschiedliche Richtungen haben, wobei sich diese aber zum Teil aufheben würden, was letztendlich nur mit höheren Verlusten verbunden wäre. Wenn gleichzeitig mehrere Antriebsspulen 7, 8 mit der Transporteinheit Tn zusammenwirken, was normalerweise der Fall ist, dann kann der magnetische Fluss **ψ** einer der wirkenden Antriebsspulen 7, 8, mehrerer der wirkenden Antriebspulen 7, 8 oder auch aller wirkenden Antriebsspulen 7, 8 verändert werden. Ebenso ist es denkbar, nur an einer Seite der Transporteinheit Tn eine elektromagnetischen Seitenkraft F_{EMS1}, F_{EMS2} zu erzeugen. Entscheidend ist dabei nur die erzeugte Resultierende der auf die Transporteinheit Tn wirkenden Kräfte.

In Fig.4 Mitte wird beispielsweise der Statorstrom i_{A1} der Antriebsspulen 7 des Transportabschnitts Am, in deren Bereich sich die Transporteinheit Tn befindet, so geregelt, dass eine elektromagnetischen Seitenkraft F_{EMS1} = f(**i**_{A1}) in eine Richtung entsteht. Auf der gegenüberliegenden Seite wird der Statorstrom **i**_{A2} der Antriebsspulen 8 des Transportabschnitts Am, in deren Bereich sich die Transporteinheit Tn befindet, so geregelt, dass durch die magnetische Flusskomponente ψ_{d} eine elektromagnetischen Seitenkraft F_{EMS2} = f(**i**_{A2}) in die gleiche Richtung entsteht. Damit wird die wirkende Seitenkraft F₁ auf einer Seite erhöht und die wirkende Seitenkraft F₂ auf der anderen Seite gleichzeitig verkleinert. Es kann aber ausreichend sein, nur an einer Seite eine elektromagnetischen Seitenkraft F_{EMS} zu erzeugen. Die Transporteinheit Tn erfährt damit eine resultierende Lenkkraft F_{L} aus der vektoriellen Summe der beiden Seitenkräfte F₁, F₂, also F_{L} = F₁ + F₂. Die resultierende Lenkkraft F_{L} führt die Transporteinheit Tn im gezeigten Ausführungsbeispiel entlang des Transportabschnitts Am, womit die Transporteinheit Tn im Ausfahrtsbereich der Übergabeposition U geradeaus weiterbewegt wird (Fig.4 unten).

Die Feldschwächung erfolgt dabei auf der Seite der Transporteinheit Tn, entlang der die Transporteinheit Tn nicht weiterbewegt werden soll, hier an den Antriebsspulen 8. Die Feldstärkung erfolgt an der Seite, an der die Transporteinheit Tn weiterbewegt werden soll, hier an den Antriebsspulen 7.

Es ist damit offensichtlich, dass durch Regelung der Statorströme i_{A} im Bereich der Übergabeposition als Lenkwirkung L eine Lenkkraft F_{L} in eine der beiden Seitenrichtungen erzeugt werden kann, die die Transporteinheit Tn entlang des gewünschten Transportabschnitts Am oder An führt. Dabei kann aber nicht nur die Richtung bestimmt werden, sondern insbesondere auch auch die Größe dieser Lenkkraft F_{L} zu jedem Zeitpunkt der Bewegung der Transporteinheit Tn. Diese Lenkkraft F_{L} kann dabei über die Zeit auch veränderlich sein und kann auch auf die jeweilige Transporteinheit Tn und auch auf die aktuelle Bewegung abgestellt sein. Z.B. kann eine mit einer schwereren Last beladene oder eine schneller bewegte Transporteinheit Tn eine höhere Lenkkraft F_{L} benötigen, als eine leere oder langsam bewegte Transporteinheit Tn.

Die Statorströme i_{A1}, i_{A2} der Antriebsspulen 7, 8 werden vorzugsweise so geregelt, dass die gewünschte oder von der übergeordneten Anlagenregelungseinheit 10 (Fig.9) vorgegebenen Vortriebskraft F_{V} beibehalten wird. Die Vortriebsbewegung der Transporteinheit Tn bleibt damit durch die Erzeugung der Lenkwirkung L in der Übergabeposition U unberührt. Das kann z.B. im Ausfahrtsbereich aus der Übergabeposition U (Fig.4 unten), an der nur mehr die Antriebsspulen 7 einer Seite aktiv sind, auch bedeuten, dass die die Vortriebskraft F_{V} hervorrufende q-Komponente des Statorstromes i_{A1} gleichzeitig erhöht werden muss, um die Vortriebskraft F_{V} aufrecht zu erhalten. Die Vortriebskraft F_{V} wird aber in der Regel ohnehin durch die Positionsregelung der Transporteinheit Tn eingestellt und es ist daher normalerweise nicht erforderlich, in der Übergabeposition U in diese Regelung der Vortriebskraft F_{V} einzugreifen.

Bei der Einfahrt der Transporteinheit Tn in die Übergabeposition U wird mit der aktiven Regelung der seitenkraftbildenden Stromkomponenten i_{Ad1}, i_{Ad2} der Statorströme i_{A1}, i_{A2} begonnen. Dabei ist es nicht unbedingt notwendig, dass schon bei der Einfahrt an beiden Seiten der Transporteinheit Tn elektromagnetische Seitenkräfte F_{EMS1}, F_{EMS2} erzeugt werden. Die elektromagnetischen Seitenkräfte F_{EMS1}, F_{EMS2} müssen aber im Übergabebereich durch die Statorströme i_{A1}, i_{A2} zu jedem Zeitpunkt so geregelt werden, dass sich die benötigte Lenckraft F_{L} in die gewünschte Richtung und mit dem benötigten Betrag ausbildet. Um eine definierte Lage der Transporteinheit Tn über die gesamte Länge der Übergabeposition U sicherzustellen, ist es aber vorteilhaft, wenn die elektromagnetischen Seitenkräfte F_{EMS1}, F_{EMS2} an beiden Seiten entlang der gesamten Länge der Übergabeposition U aktiv geregelt werden.

Bei der Ausfahrt der Transporteinheit Tn aus der Übergabeposition U (Fig.4 unten) erhöht sich gleichzeitig der Luftspalt zwischen dem nicht befahrenen Transportabschnitt An und der Transporteinheit Tn. Dadurch wird die erregungsmagnetische Seitenkraft F_{PMS2} an diesem Transportabschnitt An stark reduziert, was die Führung der Transporteinheit Tn entlang des gewünschten Transportabschnitts Am unterstützt. Insbesondere könnte diese Reduktion der erregungsmagnetischen Seitenkraft F_{PMS2} ausreichen, um die Transporteinheit Tn im Ausfahrtsbereich entlang des gewünschten Transportabschnitts Am zu bewegen. Die Antriebsspulen 8 an der Ausfahrt der Übergabeposition U müssten damit auch nicht mehr aktiv geregelt werden, um eine elektromagnetische Seitenkraft F_{EMS} zu erzeugen.

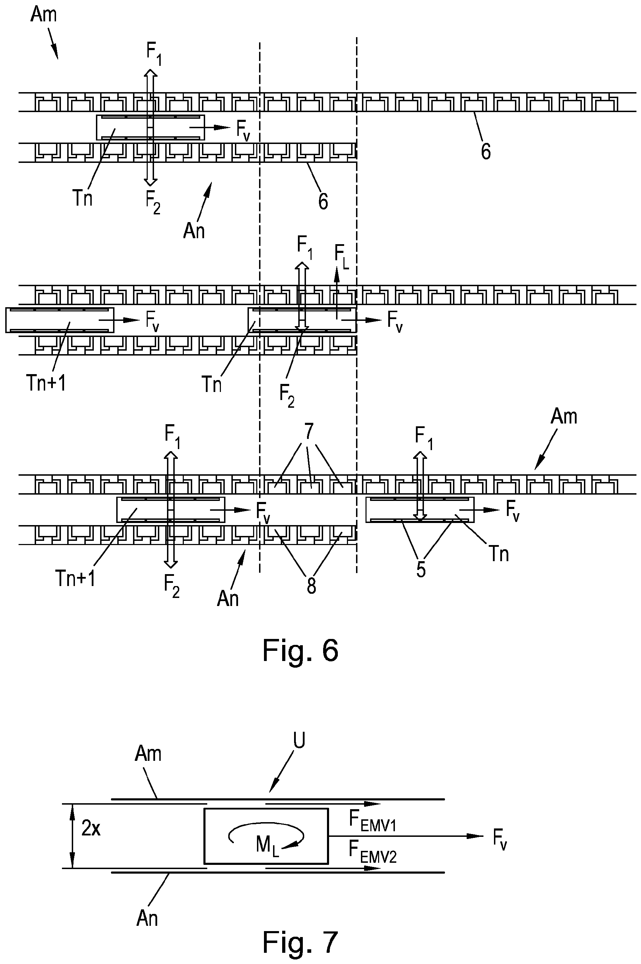

Die Übergabeposition U muss aber nicht als Weiche ausgeführt sein, sondern kann auch als Übergabe von einer Transportabschnitt Am auf einen anderen Transportabschnitt An ausgeführt sein, wie z.B. die Übergabeposition U1 in Fig.1, wo beispielswiese von einem zweiseitigen Transportabschnitt (Antriebsspulen beidseitig) auf einen einseitigen Transportabschnitt (Antriebsspulen einseitig) übergegangen wird. Eine solche Situation ist beispielhaft anhand der Fig.6 erläutert. Dabei können die Einfahrt, die Übergabeposition und die Ausfahrt wie bei einer Weiche nach Fig.4 geregelt werden. An der Ausfahrt (Fig.6 unten) reduziert sich die erregungsmagnetische Seitenkraft F_{PMS2} am Transportabschnitt An auch ohne aktive Regelung der seitenkraftbildenden Stromkomponente i_{Ad2} des Statorstromes i_{A2}. An der gegenüberliegenden Seite des Transportabschnittes Am kann die elektromagnetische Seitenkraft F_{EMS1} aus Führungsgründen (z.B. wenn die erregungsmagnetische Führung allein nicht sicher ausreicht) aufrechterhalten werden. D.h., dass es hier grundsätzlich ausreichen würde, wenn im Bereich der Einfahrt (Fig.6 oben) oder des Übergabebereiches (Fig.6 Mitte) die elektromagnetische Seitenkraft F_{EMS} an nur einer Seite geregelt wird. Es ist nicht unbedingt notwendig, gleichzeitig die elektromagnetischen Seitenkräfte F_{EMS1}, F_{EMS2} an beiden Seiten zu regeln. Gleichermaßen könnte man beim Übergang von einem einseitigen Transportabschnitt auf einen zweiseitigen Transportabschnitt vorgehen.

Damit kann mit den für den Vortrieb der Transporteinheit Tn vorgesehenen Antriebsspulen 7, 8 der jeweilige magnetische Fluss **ψ**₁, **ψ**₂ in einer Übergabeposition U an den beiden Seiten der Transporteinheit Tn über die Vorgabe der Statorströme i_{A1}, i_{A2} geregelt werden, um eine Lenkwirkung L zu erzeugen, die die Transporteinheit Tn in der Übergabeposition entlang einer der beiden Transportabschnitt Am, An führt. Dabei kann die Vortriebskraft F_{V} unverändert aufrechterhalten werden. Dieser erfinderische Gedanke kann auch noch auf eine andere vorteilhafte Weise genutzt werden. Das wird anhand der Fig.7 erläutert.

In der Übergabeposition U treffen wie bereits ausführlich beschrieben, zwei Transportabschnitte Am, An aufeinander. Die Antriebsspulen 7, 8 in Zusammenwirken mit den Erregungsmagneten 4, 5 zu beiden Seite der Transportstrecke erzeugen durch Bestromen mit den Statorströmen i_{A1}, i_{A2} vortriebskraftbildende elektromagnetische Kraftkomponenten F_{EMV1}, F_{EMV2}, die sich zur gesamten Vortriebskraft F_{V} der Transporteinheit Tn addieren, also F_{V} = F_{EMV1} + F_{EMV2}. Sind die vortriebskraftbildenden elektromagnetischen Kraftkomponenten F_{EMV1}, F_{EMV2} gleich groß, ist die Transporteinheit Tn, unter der Voraussetzung eines um die Längsachse in Bewegungsrichtung symmetrischen Aufbau, um eine Hochachse der Transporteinheit Tn momentenfrei. Sind die vortriebskraftbildenden elektromagnetischen Kraftkomponenten F_{EMV1}, F_{EMV2} jedoch unterschiedlich groß, wirkt auf die Transporteinheit Tn um die Hochachse ein Lenkmoment M_{L}, wie in Fig.7 gezeigt. Dieses Lenkmoment M_{L} kann nun ebenfalls als Lenkwirkung L zur Führung der Transporteinheit Tn entlang eines gewünschten Transportabschnittes A genutzt werden.

Die Vortriebskraft Fᵥ wird normalerweise über die Position s der Transporteinheit Tn entlang der Transportstrecke geregelt, sodass die Transporteinheit Tn zu jedem Zeitpunkt an der vorgesehenen Position ist. Damit wird indirekt auch die aktuelle Geschwindigkeit und die Beschleunigung der Transporteinheit Tn geregelt.

Bekannterweise ergeben sich die vortriebskraftbildenden elektromagnetischen Kraftkomponenten F_{EMV1}, F_{EMV2} unmittelbar aus der vortriebskraftbildenden Komponente i_{Aq1}, i_{Aq2} des jeweils eingeprägten Statorstromes i_{A1}, i_{A2} durch Multiplikation mit einer bekannten Kraftkonstante K_{f}. Hier wird in weiterer Folge und ohne Einschränkung der Allgemeinheit angenommen, dass die elektrischen Komponenten des Langstatorlinearmotors an beiden Seiten gleich ausgelegt sind, sodass auch die Kraftkonstante K_{f} an beiden Seiten gleich groß ist. Damit ergeben sich die vortriebskraftbildenden elektromagnetischen Kraftkomponenten F_{EMV1}, F_{EMV2} zu F_{EMV1}=K_{f}·i_{Aq1} und F_{EMV2}=K_{f}·i_{Aq2.} Die vortriebskraftbildenden Komponente i_{Aq1}, i_{Aq2} des jeweils eingeprägten Statorstromes i_{A1}, i_{A2} werden in einer Regelung über den Positionsfehler E der Transporteinheit Tn geregelt, um die benötigte Vortriebskraft F_{V} zu erzeugen. Der Positionsfehler E ist dabei als Differenz aus einer Sollposition Sₛₒₗₗ und einer Istposition sᵢₛₜ gegeben, E = sₛₒₗₗ-sᵢₛₜ. Die Istposition sᵢₛₜ wird dabei mit bekannten Mitteln erfasst. Damit gilt allgemein F_{EMVj} = K_{f}·i_{Aqj} = K_{f}·K·E = K_{f}·K·(s_{j,soll} - s_{j,ist}), mit einer Regelungskonstanten K. Berücksichtigt man noch, dass die Istpositionen der Transporteinheit Tn an beiden Seiten gleich sein müssen, also s_{1,ist} = s_{2,ist}, dann folgt F_{EMV1} - F_{EMV2} = K_{f}·K·(s_{1,soll} - s_{2,soll}).

Werden die Sollpositionen der beiden Seiten der Transporteinheit Tn in der Regelung jeweils mit einer Modifikationsgröße Δs₁, Δs₂ modifiziert, also (s_{1,soll} + Δs₁ und s_{2,soll} + Δs₂), kann über die Modifikationsgröße ein gewünschtes Lenkmoment M_{L} eingestellt werden. Mit dem Ansatz s_{1,soll} = s_{2,soll} ergibt sich dann F_{EMV1} - F_{EMV2} = K_{f}·K·(Δs₁ - Δs₂) und das Lenkmoment M_{L} = (F_{EMV1} - F_{EMV2})·x = K_{f}·K·(Δs₁ - Δs₂)·x.

In einer bevorzugten Ausgestaltung wird die Modifikationsgröße Δs/2 an einer Seite addiert und an der anderen Seite subtrahiert, woraus sich unmittelbar der Zusammenhang F_{EMV1} - F_{EMV2} = K_{f}·K·(s_{1,soll} - s_{2,soll} + Δs) ergibt. Hierbei kann wieder der Ansatz s_{1,soll} = s_{2,soll} gemacht werden, da ja über die Modifikationsgröße Δs eingegriffen wird und es ergibt sich F_{EMV1} - F_{EMV2} = K_{f}·K ·Δs. Wird der Abstand zwischen den beiden Luftspaltmitten mit 2x bezeichnet (Fig.7), folgt das Lenkmoment unmittelbar aus M_{L} = (F_{EMV1} - F_{EMV2})·x = K_{f}·K ·Δs·x.

Durch die Positionsregelung in Form der Sollpositionsvorgabe s_{1,soll}, s_{2,soll} wird die Vortriebskraft F_{V} der Transporteinheit Tn geregelt. Durch Vorgabe der Modifikationsgröße Δs, bzw. der Modifikationsgrößen Δs₁, Δs₂, werden vortriebskraftbildende elektromagnetische Kraftkomponenten F_{EMV1}= K_{f}·K Δs/2 und F_{EMV2} = -K_{f}·K Δs/2 bzw. F_{EMV1} = K_{f}·K Δs₁ und F_{EMV2} = K_{f}·K Δs₂ erzeugt, die der ursprünglichen vortriebskraftbildenden elektromagnetischen Kraftkomponenten durch die Positionsregelung in Form der Sollpositionsvorgabe s_{1,soll}, s_{2,soll} und somit auch der Vortriebskraft F_{V} überlagert werden und die ein gewünschtes Lenkmoment M_{L} erzeugen. Hierbei ist es natürlich ausreichend, dass an nur einer Seite eine vortriebskraftbildende elektromagnetische Kraftkomponenten F_{EMV1}, F_{EMV2} überlagert wird, um ein Lenkmoment M_{L} zu erzeugen.

Durch die Verwendung einer Modifikationsgröße ±Δs/2 kann auf einfache Weise sichergestellt werden, dass die Vortriebskraft F_{V} als Summe der beiden vortriebskraftbildenden elektromagnetischen Kraftkomponenten F_{EMV1}, F_{EMV2} nicht beeinflusst wird. Die Vorwärtsbewegung der Transporteinheit Tn wird dann durch das Einprägen eines Lenkmoments M_{L} also nicht beeinflusst.

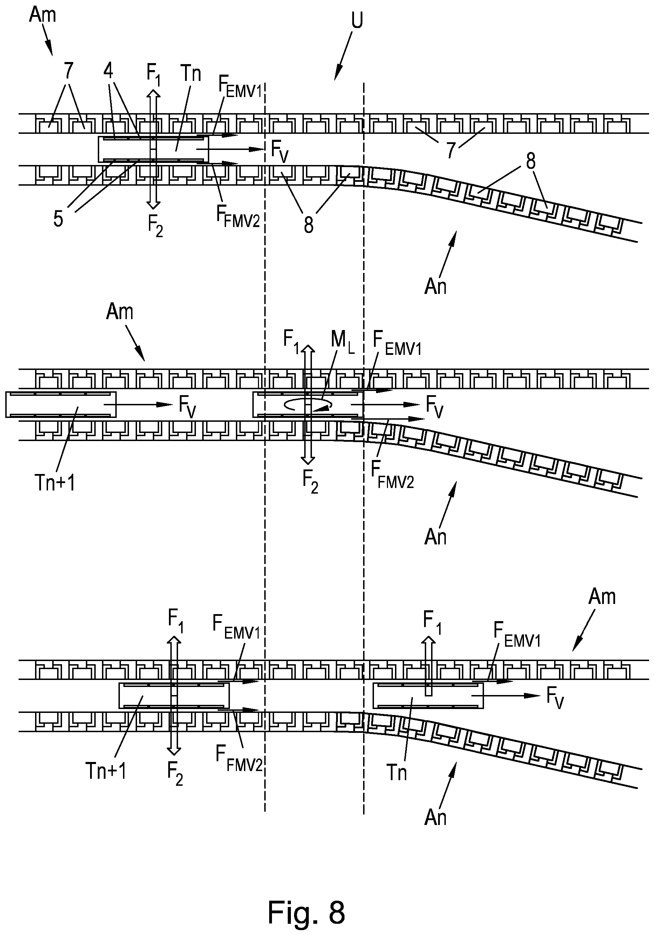

Das Lenkmoment M_{L} als Lenkwirkung L kann nun in einer Übergabeposition U genutzt werden, um die Transporteinheit Tn entlang eines gewünschten Transportabschnittes A zu bewegen, wie anhand der Fig.8 erläutert wird. Darin ist wieder eine Weiche als Übergabeposition U dargestellt. In der Einfahrt (Fig.8 oben) werden die vortriebskraftbildenden elektromagnetischen Kraftkomponenten F_{EMV1}, F_{EMV2} auf den gleichen Wert geregelt, womit sich Δs=0 und M_{L}=0 ergibt. Im Übergabebereich (Fig.8 Mitte), wird durch Vorgabe der Modifikationsgrößen Δs₁, Δs₂ ein Lenkmoment M_{L} wie oben beschrieben erzeugt, das dazu führt, dass die Transporteinheit Tn entlang des Transportabschnittes Am geführt wird und entlang des Transportabschnittes Am weiterbewegt wird. Im Ausfahrtsbereich der Übergabeposition (Fig.8 unten) kann die Transporteinheit Tn dann wie gehabt nur an einer Seite angetrieben weiterbewegt werden (wie in Fig.8), oder es kann ein beidseitiger Antrieb vorgesehen sein.

Die Methode der Lenkkraft F_{L} und die Methode des Lenkmoments M_{L} kann natürlich auch kombiniert werden, wie in Fig.8 angedeutet.

Das Aufbringen einer ausreichenden Lenkkraft F_{L} und/oder eines ausreichenden Lenkmoments M_{L} ist an sich natürlich nur so lange erforderlich, bis die Führungselemente der Transporteinheit Tn, z.B. Rollen, Räder, Gleitflächen, Magnetlager, oder Ähnliches, am gewünschten Transportabschnitt A sicher wirken. Damit ist eine definierte Lage der Transporteinheit Tn sichergestellt und die aktive Regelung der Antriebsspulen 7, 8 zum Aufbringen der Lenkwirkung L (Lenkkraft F_{L} und/oder Lenkmoments M_{L}) kann beendet werden.

Das Regelungskonzept für die Transporteinrichtung 1 und damit auch für erfindungsgemäße Übergabeposition U wird nun anhand der Fig. 9 und 10 erläutert.

Eine übergeordnete Regeleinheit 10 ist für die Bewegung der Transporteinheiten Tn im Langstatorlinearmotor entlang der Transportstrecke zuständig. Die Regeleinheit 10 gibt damit die Bewegung der Transporteinheiten Tn vor, beispielsweise durch die Vorgabe von Sollpositionswerten sₛₒₗₗ, und steuert damit auch die Geschwindigkeit, Beschleunigung der Transporteinheiten Tn. Gleichfalls ist die übergeordnete Regeleinheit 10 auch für die Führung der Transporteinheiten Tn enlang der Transporteinrichtung 1 zuständig und damit auch für die Lenkung der Transporteinheiten Tn in Übergabepositionen U. Die Regeleinheit 10 gibt damit auch die auf die Transporteinheiten Tn wirkende Lenkwirkung L vor, beispielsweise durch die Vorgabe von Sollwerten des magnetischen Flusses **ψ**_{sοll}, und bestimmt damit, entlang welcher Transportstrecke die Transporteinheiten Tn in der Transproteinrichtung 1 bewegt werden. Die übergeordnete Regeleinheit 10 gibt für jede der bewegten Transporteinheiten Tn entsprechende Sollwerte für die Position sₛₒₗₗ und den magnetischen Fluss **ψ**_{sοll} vor.

Jedem Transportsegment TSn, TSn+1, oder allgemein einer Gruppe von Antriebsspulen 7, 8 oder auch jeder Antriebsspule 7, 8, eines Transportabschnitts An ist eine Segmentregelungseinheit 11ₙ, 11ₙ₊₁ zugeordnet, die die Antriebsspulen 7, 8 des jeweiligen Transportsegments TSn, TSn+1 individuell mit einem Statorstrom i_{A} ansteuert. Dabei kann natürlich auch vorgesehen sein, für die die Antriebsspulen 7, 8 jeder Seite einen eigene Segmentregelungseinheit 11ₙ, 11ₙ₊₁ vorzusehen, wobei die Segmentregelungseinheiten 11ₙ, 11ₙ₊₁ an jeder Seite auch über eine Datenleitung miteinander verbunden sein können und Datenuntereinander austauschen können. Jede Segmentregelungseinheit 11ₙ, 11ₙ₊₁ erzeugt aus den Sollwertvorgaben für den für die Position sₛₒₗₗ und den magnetischen Fluss **ψ**ₛₒₗₗ einen Statorstrom **i**_{A}, mit dem die Antriebsspulen 7, 8 beaufschlagt werden. Vorzugsweise werden dabei nur die Antriebsspulen 7, 8 geregelt, die mit der Transporteinheit Tn, bzw. deren Erregungsspulen 4, 5, zusammenwirken. Der Statorstrom i_{A} ist ein Stromvektor (Stromraumzeiger), der eine vortriebskraftbildende Komponente i_{Aq} zur Erzeugung der Vortriebskraft F_{V} umfasst und der einen magnetischen Fluss **ψ** bewirkt. In der Übergabeposition U können nun über die Stromvektoren **i**_{A1}, **i**_{A2} modifizierte vortriebskraftbildende elektromagnetische Kraftkomponenten F_{EMV1}, F_{EMV2} und/oder seitenkraftbildende elektromagnetische Kraftkomponenten F_{EMS1}, F_{EMS2} eingeprägt werden, die die benötigte Lenkwirkung L bewirken. Der Statorstromvektor i_{A} erzeugt damit in Zusammenwirken mit den Erregungsmagneten 4, 5 der Transporteinheit Tn wie beschrieben zu jedem Zeitpunkt die gewünschte Wirkung auf die Transporteinheit Tn, insbesondere eine Vortriebskraft F_{V} und gegebenenfalls eine Lenkwirkung L (Lenkkraft F_{L} und/oder Lenkmoments M_{L}).

In einer Segmentregelungseinheit 11 sind für jede Antriebsspule 7, 8 ein Lenkregler RL zur Regelung der Lenkwirkung L und ein Positionsregler RP zur Regelung der Position s implementiert, wie in Fig.10 dargestellt. Die Regelung der Lenkwirkung L ist vorzugsweise nur in einer Übergabeposition U aktiv und erfolgt beispielsweise auf Basis des magnetischen Flusses **ψ** und es wird ein Sollfluss **ψ**_{sοll} wie oben beschrieben vorgegeben. Außerhalb einer Übergabeposition U wird in der Regel nur die Vortriebskraft F_{V} geregelt. Der aktuelle Istfluss **ψ**ᵢₛₜ wird messtechnisch erfasst oder mittels eines geeigneten Beobachters geschätzt und mit dem Sollfluss **ψ**_{sοll} verglichen. In einer Übergabeposition U regelt der Lenkregler RL die Flussdifferenz bzw. den Flussfehler e_{ψ} = **ψ**_{sοll} - **ψ**ᵢₛₜ aus, um die gewünschte Lenkwirkung L zu erzeugen. Dazu kann ein beliebiger geeigneter Regler verwendet werden. Der Lenkregler RL berechnet dazu für die geregelte Antriebsspule 7, 8 eine seitenkraftbildende Stromkomponente i_{Ad} des Statorstromes i_{A} und gegebenenfalls auch eine Modifikationsgröße Δs bzw. Δs/2 (falls als Lenkwirkung auch ein Lenkmoment M_{L} verwendet wird. Der Positionsregler RP regelt einen Positionsfehler eₛ aus, der sich aus der vorgegebenen Sollposition sₛₒₗₗ und der aktuellen Istposition iᵢₛₜ ergibt. Die Istposition iᵢₛₜ kann messtechnisch erfasst werden oder kann auch andere geeignete Weise ermittelt werden, beispielswies wieder durch einen regelungstechnischen Beobachter. In den Positionsfehler eₛ geht, zumindest in einer Übergabeposition U bei Verwendung des Lenkmoments M_{L} als Lenkwirkung L, auch die Modifikationsgröße Δs ein. Damit ergibt sich der Positionsfehler eₛ beispielsweise zu eₛ = sₛₒₗₗ - sᵢₛₜ [-Δs/2]. Zum Ausregeln des Positionsfehlers eₛ kann ein beliebiger geeigneter Regler verwendet werden. Zur Positionsregelung ermittelt der Positionsregler RP für die geregelte Antriebsspule 7, 8 eine vortriebskraftbildende Stromkomponente i_{Aq} des Statorstromes **i**_{A}. Damit sind beide Komponenten des Statorstromes **i**_{A} vorhanden und der ermittelte Statorstrom i_{A} kann der Regelstrecke, hier die Transporteinrichtung 1 bzw. den vorgesehenen Teilen, insbesondere der geregelten Antriebsspule 7, 8, eingeprägt werden.

## Patentansprüche

1. Verfahren zur Übergabe einer Transporteinheit (Tn) eines Langstatorlinearmotors an einer Übergabeposition (U) von einem ersten Transportabschnitt (Am), mit einer Anzahl von in Bewegungsrichtung der Transporteinheit (Tn) hintereinander an einer Führungskonstruktion (6) angeordneten Antriebsspulen (7, 8) im Bereich der Übergabeposition (U), an einen zweiten Transportabschnitt (An), mit einer Anzahl von in Bewegungsrichtung der Transporteinheit (Tn) hintereinander an einer Führungskonstruktion (6) angeordneten Antriebsspulen (7, 8) im Bereich der Übergabeposition (U), wobei an beiden Seiten der Transporteinheit (Tn) Erregungsmagnete (4, 5) angeordnet sind, die mit Antriebsspulen (7, 8) im Bereich der Transporteinheit (Tn) zusammenwirken, wobei im Bereich der Übergabeposition (U) an beiden Seiten der Transporteinheit (Tn) Antriebsspulen (7, 8) vorgesehen sind, die mit den Erregungsmagneten (4, 5) an den beiden Seiten der Transporteinheit (Tn) zusammenwirken können, und der zweite Transportabschnitt (An) an einer Ausfahrt aus der Übergabeposition (U) einseitig mit Antriebsspulen (7, 8) an nur einer Seite, die mit Erregungsmagneten (4, 5) an dieser Seite der Transporteinheit (Tn) zusammenwirken können, ausgeführt ist, und wobei im Bereich der Übergabeposition (U) aufgrund des Zusammenwirkens der Erregungsmagnete (4, 5) mit ferromagnetischen Bestandteilen der Führungskonstruktion (6) an beiden Seiten der Transporteinheit (Tn) erregungsmagnetische Seitenkräfte (F_{PMS1}, F_{PMS2}) auf die Transporteinheit (Tn) wirken, **dadurch gekennzeichnet, dass** in einem Übergabebereich der Übergabeposition (U) an zumindest einer Seite der Transporteinheit (Tn) in zumindest eine Antriebsspule (7, 8) ein Statorstrom (i_{A1}, i_{A2}) eingeprägt wird, der eine elektromagnetische Seitenkraft (F_{EMS1}, F_{EMS2}) auf die Transporteinheit (Tn) erzeugt **und dass** die an beiden Seiten der Transporteinheit (Tn) resultierenden Seitenkräfte (F₁, F₂), jeweils als Summe der wirkenden erregungsmagnetischen Seitenkraft (F_{PMS1}, F_{PMS2}) und der elektromagnetischen Seitenkraft (F_{EMS1}, F_{EMS2}), im Betrag unterschiedlich sind, um eine Lenkwirkung (L) zu erzeugen, wobei die Lenkwirkung (L) die Transporteinheit (Tn) in der Übergabeposition (U) entlang des zweiten Transportabschnittes (An) führt.

2. Verfahren nach Anspruch 1, **dadurch gekennzeichnet, dass** an beiden Seiten der Transporteinheit (Tn) eine elektromagnetische Seitenkraft (F_{EMS1}, F_{EMS2}) erzeugt wird.

3. Verfahren nach Anspruch 2, **dadurch gekennzeichnet, dass** an beiden Seiten der Transporteinheit (Tn) gleichgerichtete elektromagnetische Seitenkräfte (F_{EMS1}, F_{EMS2}) erzeugt werden.

4. Verfahren nach Anspruch 2, **dadurch gekennzeichnet, dass** an beiden Seiten der Transporteinheit (Tn) elektromagnetische Seitenkräfte (F_{EMS1}, F_{EMS2}) mit unterschiedlichen Richtungen erzeugt werden.

5. Verfahren nach einem der Ansprüche 1 bis 4, **dadurch gekennzeichnet, dass** gleichzeitig mehrere Antriebsspulen (7, 8) mit Erregungsmagneten (4, 5) an der Transporteinheit (Tn) zusammenwirken und ein Statorstrom (i_{A1}, i_{A2}) in eine wirkende Antriebsspule (7, 8), in mehrere wirkende Antriebsspule (7, 8) oder in alle wirkende Antriebsspulen (7, 8) eingeprägt wird.

6. Verfahren nach einem der Ansprüche 1 bis 5, **dadurch gekennzeichnet, dass** mit einer vortriebskraftbildenden Stromkomponente (i_{Aq1}, i_{Aq2}) des Statorstromes (i_{A1}, i_{A2}) eine auf die Transporteinheit (Tn) wirkende Vortriebskraft (Fv) geregelt wird und in der Übergabeposition (U) mit einer seitenkraftbildenden Stromkomponente (i_{Ad1}, i_{Ad2}) des Statorstromes (i_{A1}, i_{A2}) die Lenkwirkung (L) geregelt wird.

## Claims

1. A method for transferring a transport unit (Tn) of a long stator linear motor at a transfer position (U) from a first transport section (Am), having a number of driving coils (7, 8) arranged on a guide structure (6) one behind the other in the direction of movement of the transport unit (Tn) in the region of the transfer position (U), to a second transport section (An), having a number of driving coils (7, 8) arranged on a guide structure (6) one behind the other in the direction of movement of the transport unit (Tn) in the region of the transfer position (U), wherein on both sides of the transport unit (Tn) excitation magnets (4, 5) are arranged which interact with driving coils (7, 8) in the region of the transport unit (Tn), wherein in the region of the transfer position (U) on both sides of the transport unit (Tn) driving coils (7, 8) are provided that can interact with the excitation magnets (4, 5) on both sides of the transport unit (Tn), and the second transport section (An), at an exit from the transfer position (U), is implemented single-sided with driving coils (7, 8) on only one side, that can interact with excitation magnets (4, 5) at this side, and wherein in the region of the transfer position (U) excitation-magnetic lateral forces (F_{PMS1}, F_{PMS2}) act on the transport unit (Tn) on both sides of the transport unit (Tn) due to the co-operation of the excitation magnets (4, 5) with ferromagnetic components of the guide structure (6), **characterized in that** in a transfer region of the transfer position (U) on at least one side of the transport unit (Tn) a stator current (i_{A1}, i_{A2}) is supplied in at least one driving coil (7, 8), which stator current (i_{A1}, i_{A2}) generates an electromagnetic lateral force (F_{EMS1}, F_{EMS2}) on the transport unit (Tn) **and in that** the resulting lateral forces (F₁, F₂) on both sides of the transport unit (Tn), in each case as sum of the acting excitation-magnetic lateral forces (F_{PMS1}, F_{PMS2}) and electromagnetic lateral force (F_{EMS1}, F_{EMS2}), are different in magnitude for production of a steering effect (L), wherein the steering effect (L) guides the transport unit (Tn) in the transfer position (U) along the second transport section (Am).

2. The method according to claim 1, **characterized in that** an electromagnetic lateral force (F_{EMS1}, F_{EMS2}) is generated on both sides of the transport unit (Tn).

3. The method according to claim 2, **characterized in that** on both sides of the transport unit (Tn), electromagnetic lateral forces (F_{EMS1}, F_{EMS2}) are generated that are directed in the same direction.

4. The method according to claim 2, **characterized in that** on both sides of the transport unit (Tn), electromagnetic lateral forces (F_{EMS1}, F_{EMS2}) are generated that have different directions.

5. The method according to one of claims 1 to 4, **characterized in that** several driving coils (7, 8) simultaneously co-operate with excitation magnets (4, 5) on the transport unit (Tn) and a stator current (i_{A1}, i_{A2}) is supplied in one of the acting driving coils (7, 8), in several acting driving coils (7, 8) or in all acting driving coils (7, 8).

6. The method according to one of claims 1 to 5, **characterized in that** a propulsive force (Fv) acting on the transport unit (Tn) is controlled with a propulsive force-forming component (i_{Aq1}, i_{Aq2}) of the stator current (i_{A1}, i_{A2}) and the steering effect (L) is controlled in the transfer position (U) with a lateral force-forming current component (i_{Ad1}, i_{Ad2}) of the stator current (i_{A1}, i_{A2}).

## Revendications

1. Procédé de transfert d'une unité de transport (Tn) d'un moteur linéaire à stator long dans une position de transfert (U) d'une première section de transport (Am) comportant un certain nombre de bobines d'entraînement (7, 8) disposées les unes derrière les autres sur une structure de guidage (6) dans la direction de déplacement de l'unité de transport (Tn) dans la zone de la position de transfert (U) vers une seconde section de transport (An) comportant un certain nombre de bobines d'entraînement (7, 8) disposées les unes derrière les autres sur une structure de guidage (6) dans la zone de la position de transfert (U), des aimants d'excitation (4, 5) étant disposés sur les deux côtés de l'unité de transport (Tn), lesquels aimants d'excitation coopèrent avec les bobines d'entraînement (7, 8) dans la zone de l'unité de transport (Tn), des bobines d'entraînement (7, 8) étant prévues sur les deux côtés de l'unité de transport (Tn) dans la zone de la position de transfert (U), lesquelles bobines d'entraînement peuvent coopérer avec les aimants d'excitation (4, 5) sur les deux côtés de l'unité de transport (Tn), et la seconde section de transport (An) au niveau d'une sortie d'une position de transfert (U) étant réalisée d'un côté avec des bobines d'entraînement (7, 8) sur un seul côté, lesquelles bobines d'entraînement peuvent coopérer avec les aimants d'excitation (4, 5) sur ce côté de l'unité de transport (Tn), et des forces latérales d'excitation magnétique (F_{PMS1}, F_{PMS2}) agissant, dans la zone de la position de transfert (U), sur l'unité de transport (Tn) des deux côtés de l'unité de transport (Tn) en raison de l'interaction des aimants d'excitation (4, 5) avec les composants ferromagnétiques de la structure de guidage (6), **caractérisé en ce qu'**un courant statorique (i_{A1}, i_{A2}) est appliqué dans au moins une bobine d'entraînement (7, 8) dans une zone de transfert de la position de transfert (U) au moins d'un côté de l'unité de transport (Tn), lequel courant statorique génère une force latérale électromagnétique (F_{EMS1}, F_{EMS2}) sur l'unité de transport (Tn), **et en ce que** les forces latérales (F₁, F₂) résultant des deux côtés de l'unité de transport (Tn), représentant la somme de la force latérale d'excitation magnétique (F_{PMS1}, F_{PMS2}) active et de la force latérale électromagnétique (F_{EMS1}, F_{EMS2}), varient en amplitude afin de générer un effet de direction (L), l'effet de direction (L) guidant l'unité de transport (Tn) dans la position de transfert (U) le long de la seconde section de transport (An).

2. Procédé selon la revendication 1, **caractérisé en ce qu'une** force latérale électromagnétique (F_{EMS1}, F_{EMS2}) est générée des deux côtés de l'unité de transport (Tn).

3. Procédé selon la revendication 2, **caractérisé en ce que** des forces latérales électromagnétiques (F_{EMS1}, F_{EMS2}) redressées sont générées des deux côtés de l'unité de transport (Tn).

4. Procédé selon la revendication 2, **caractérisé en ce que** des forces latérales électromagnétiques (F_{EMS1}, F_{EMS2}) de directions différentes sont générées des deux côtés de l'unité de transport (Tn).

5. Procédé selon l'une des revendications 1 à 4, **caractérisé en ce que** plusieurs bobines d'entraînement (7, 8) agissent conjointement avec des aimants d'excitation (4, 5) sur l'unité de transport (Tn), et un courant statorique (i_{A1}, i_{A2}) est appliqué dans une bobine d'entraînement (7, 8) active, dans plusieurs bobines d'entraînement (7, 8) actives ou dans toutes les bobines d'entraînement (7, 8) actives.

6. Procédé selon l'une des revendications 1 à 5, **caractérisé en ce qu'**une force de propulsion (Fv) agissant sur l'unité de transport (Tn) est régulée par une composante de courant de formation de force de propulsion (i_{Aq1}, i_{Aq2}) du courant statorique (i_{A1}, i_{A2}), et l'effet de direction (L) est régulé dans la position de transfert (U) par une composante de courant de formation de force latérale (i_{Ad1}, i_{Ad2}) du courant statorique (i_{A1}, i_{A2}).
